# EUROPÄISCHE PATENTSCHRIFT

(11) **EP 2 467 231 B1**
(45) Veröffentlichungstag und Bekanntmachung des Hinweises auf die Patenterteilung: **21.02.2018**
(21) Anmeldenummer: 10740537.5
(22) Anmeldetag: 27.07.2010
(51) Int. Cl.: B21D 39/04, B21D 41/02, B62D 1/10, F16B 4/00, B23P 15/00, B62D 1/16, F16D 1/072, B23P 11/00

(54) **VERFAHREN ZUR HERSTELLUNG EINES EINEN ABSCHNITT EINER LENKSPINDEL BILDENDEN LENKSPINDELTEILS**
METHOD FOR PRODUCING A STEERING SHAFT PART THAT FORMS A SECTION OF A STEERING SHAFT
PROCÉDÉ DE FABRICATION D'UN ÉLÉMENT DE COLONNE DE DIRECTION FORMANT UNE SECTION D'UNE COLONNE DE DIRECTION

(30) Priorität: 21.08.2009 DE 102009038316
(43) Veröffentlichungstag der Anmeldung: 27.06.2012
(73) Patentinhaber: ThyssenKrupp Presta Aktiengesellschaft, 9492 Eschen (LI)
(72) Erfinder: WALSER, Michael, San Pedro Cholula Puebla (MX)
(74) Vertreter: Hofmann, Ralf U.
(86) Internationale Anmeldenummer: PCT/EP2010/004581
(87) Internationale Veröffentlichungsnummer: WO 2011/020539

(56) Entgegenhaltungen:
- WO-A1-02/02377
- WO-A1-97/48507
- WO-A1-2007/098513
- DE-A1-102004 009 188
- US-A- 4 304 147
- US-A- 4 469 356

## Beschreibung

Die Erfindung bezieht sich auf ein Verfahren zur Herstellung eines einen Abschnitt einer Lenkspindel bildenden Lenkspindelteils, welches zumindest in einem Endbereich einen Verstärkungsabschnitt aufweist, über den das Lenkspindelteil eine gegenüber einem zur Längsmitte des Lenkspindelteils hin anschließenden Abschnitt des Lenkspindelteils vergrößerte Wandstärke aufweist, und welches ein Rohr und eine im Verstärkungsabschnitt des Lenkspindelteils angeordnete und die vergrößerte Wandstärke ausbildende Hülse umfasst, wobei Verbindungselemente ausgebildet werden, die zur Verbindung des Lenkspindelteils mit einem Lenkrad oder einer Gabel für ein Universalgelenk oder einem Lenkritzel dienen und von denen sich zumindest ein Teil im durch die Hülse verstärkten Verstärkungsabschnitt befindet. Weiters bezieht sich die Erfindung auf ein in dieser Weise ausgebildetes, mit einem Lenkrad oder einer Gabel für ein Universalgelenk oder einem Lenkritzel verbundenes Lenkspindelteil.

Lenkspindeln von Kraftfahrzeugen weisen üblicherweise mehrere Lenkspindelteile auf, die jeweils einen Abschnitt der Lenkspindel bilden. Am bezogen auf die Fahrtrichtung hintersten Lenkspindelabschnitt ist an dessen hinterem Ende das Lenkrad festgelegt. Am bezogen auf die Fahrtrichtung vordersten Lenkspindelabschnitt ist an dessen vorderem Ende häufig ein Ritzel zum Eingriff in das Lenkgetriebe festgelegt. Neben Lenkspindelteilen, die über Kardangelenke miteinander verbunden sind, können gegeneinander verschiebbare (teleskopierbare) Lenkspindelteile vorhanden sein, welche zur Einstellung der Länge der Lenksäule und/oder zur Aufnahme von Längsverschiebungen im Crashfall dienen.

Die Verbindung des Lenkrades mit dem hintersten Lenkspindelteil erfolgt bei einer bekannten Ausführungsform mittels einer Verschraubung. Hierzu besitzt das in Form einer Hohlwelle ausgebildete Lenkspindelteil endseitig einen Verbindungsabschnitt, welcher ausgehend vom Ende des Lenkspindelteils einen im Wesentlichen hohlzylindrischen Abschnitt und anschließend an diesen einen konischen Abschnitt, der sich zur Mitte des Lenkspindefteils hin erweitert, aufweist. Der hohlzylindrische Abschnitt ist mit einem Innengewinde und einer Außenverzahnung versehen. Die Außenverzahnung greift in eine Innenverzahnung der Nabe des Lenkrads ein und mittels des Innengewindes erfolgt die Verschraubung des Lenkrads am Lenkspindelteil. Das Lenkspindelteil muss hierbei im Verbindungsabschnitt, insbesondere im hohlzylindrischen Endabschnitt eine ausreichend große Wandstärke aufweisen. Diese ist größer als die zur Übertragung des Drehmoments erforderliche Wandstärke über die restliche Länge des Lenkspindelteils. Herkömmlicherweise werden daher zur Ausbildung des Lenkspindelteils Rohre verwendet, die zunächst eine größere Wandstärke aufweisen, als sie - abgesehen vom Verbindungsabschnitt - erforderlich ist. Es erfolgt dann eine Bearbeitung des Rohrs über seine gesamte Längsausdehnung, insbesondere durch Hämmern oder ein ähnliches Umformverfahren, beispielsweise Kneten. Im Verbindungsabschnitt wird hierbei der Durchmesser des Rohrs verringert. Über die restliche Länge des Rohrs wird die Wandstärke des Rohrs verringert. Weiters können hierbei auch über Abschnitte des Rohrs Strukturen eingebracht werden, die beispielsweise zur teleskopierbaren, aber unverdrehbaren Verbindung mit einem weiteren Lenkspindelteil dienen. Die Ausbildung von solchen Konturen, insbesondere in Form von Bogenverzahnungen oder Kleeblattprofilen ist bekannt. Beispielsweise zeigt die DE 197 50 005 C1 Lenkspindelteile mit derartigen Konturen.

Aufgrund der erforderlichen Umformung des Rohrs über seine gesamte Länge ist dieser Prozess sehr arbeitsaufwendig und auch schwer beherrschbar.

Es ist zwar möglich, die Wandstärke eines Rohrs durch Hämmern aufzudicken. Aufgrund der eine solche Aufdickung limitierenden Faktoren muss aber dennoch ein Rohr als Ausgangsprodukt eingesetzt werden, das eine größere Wandstärke besitzt, als dies für die erforderliche Drehmomentübertragung notwendig wäre. Dadurch wird das Lenkspindelteil insgesamt schwer oder das Rohr muss wiederum über seine gesamte Länge bearbeitet werden, um die Wandstärke abgesehen vom Verbindungsabschnitt entsprechend zu verringern.

Die DE 10 2004 009 188 A1 zeigt zwei teleskopierbar miteinander verbundene Lenkspindelteile, die im Längsschnitt gesehen komplizierte Konturen mit unterschiedlichen Dickenbereichen ihrer Wandstärken aufweisen, wobei an ihren voneinander entfernten Enden Verbindungsabschnitte zur Verbindung mit einem Lenkrad bzw. einem Lenkgetriebe vorgesehen sind. Solche Wandstärkenprofile können durch umformende Bearbeitungen von Rohren über ihre gesamten Längen ausgebildet werden.

Eine Befestigung eines Lenkrades an einer Lenkwelle mittels einer quer zur Achse der Lenkspindel angeordneten Schraube, die mit einem Haltekonus zusammenwirkt und diesen in einer Ausnehmung der Lenkradnabe verschiebt und gegen die Lenkwelle verspannt, ist aus der EP 1 138 575 B1 bekannt. Das Lenkspindelteil, an welchem das Lenkrad endseitig befestigt wird, ist hier massiv ausgebildet, könnte aber auch als Hohlwelle mit einer ausreichend dicken Wandstärke ausgebildet sein.

Eine weitere Befestigung eines Lenkrades am Ende des an das Lenkrad anschließenden Lenkspindelteils ist aus der US 4,819,961 A bekannt. Das als Hohlwelle ausgebildete Lenkspindelteil besitzt endseitig einen Verbindungsabschnitt, in welchem sich das Rohr des Lenkspindelteils zu seinem Ende hin zunächst konisch verjüngt und daran anschließend noch einen hohlzylindrischen Abschnitt mit einer Innenverzahnung aufweist. Im Verbindungsabschnitt ist ein Klemmstück angeordnet, dessen Außenkontur der Innenkontur des Rohrs entspricht und welches endseitig aus dem Rohr herausragt. Es weist erste und zweite Außenverzahnungen auf, die einerseits mit der Innenverzahnung des Rohrs und andererseits mit einer Innenverzahnung der Lenkradnabe zusammenwirken, und besitzt weiters ein Innengewinde, in welches eine an der Lenkradnabe angreifende Schraube eingeschraubt ist, um die Teile miteinander zu verspannen. Durch das massive, in den Verbindungsabschnitt eingesetzte Spannstück kann die Wandstärke des Lenkspindelteils über seine Länge konstant ausgebildet sein. Bei einer derartigen Klemmverbindung besteht die Gefahr, dass sich die aufgebrachten Klemmkräfte im Laufe der Zeit verringern, wodurch es zu einem unerwünschten Spiel kommen kann. Weiters muss das Klemmstück von der lenkradfernen Seite durch das Lenkspindelteil eingeführt werden. Das Lenkspindelteil darf somit keine Bereiche mit verringertem Querschnitt aufweisen, z.B. um eine teleskopierbare, Drehmoment übertragende Verbindung mit einem weiteren Lenkspindelteil auszubilden. Weiters kann das Klemmstück bei einem Abnehmen des Lenkrades ins Innere des Lenkspindelteils rutschen, wo es in der Folge unzugänglich ist.

Aus der DE 25 45 927 B2 geht ein Lenkspindelteil in Form eines Sicherheitswellenstücks hervor. Dieses Sicherheitswellenstück umfasst einen gewellten mittleren Abschnitt, der sich über den Großteil der Länge des Wellenstücks erstreckt und an den beidseitig jeweils ein Zylinderhülsenabschnitt anschließt. Im Zylinderhülsenabschnitt ist ein zylindrischer Zapfen eines Wellenanschlusses angeordnet. In den zylindrischen Zapfen des Wellenanschlusses werden mehrere Radialbohrungen eingearbeitet, worauf das Wellrohr mit seinem endseitigen Zylinderhülsenabschnitt auf den Zapfen axial aufgeschoben wird. In der Folge werden aus dem Material des Zylinderhülsenabschnittes Radialvorsprünge heraus- und in die Radialbohrungen hineingedrückt, worauf der Zapfen und der Zylinderhülsenabschnitt auf der dem Wellrohr abgewandten Axialstirnseite zusätzlich durch Schweißen miteinander verbunden werden.

Die DE 103 47 101 A1 offenbart in allgemeiner Weise das Verbinden von zwei rohrförmigen Bauteilen mittels Außenhochdruckumformens. In der Beschreibung wird dargelegt, dass bei diesem Umformen das Außenrohr plastisch und das Innenrohr elastisch verformt werden.

Die US 4,304,147 zeigt eine Lenksäule, bei der zur Verstärkung eines oberen Abschnittes der Lenksäule zur Vergrößerung der Wandstärke ein inneres Rohr in einem äußeren Rohr angeordnet ist. Zur Befestigung des inneren Rohres im äußeren Rohr ist vorgesehen, dass das äußere Rohr durch mechanische Mittel in Berührung mit dem inneren Rohr gebracht wird. Das innere Rohr weist darüber hinaus einen sich verjüngenden Teil auf, welcher in Berührung mit dem äußeren Rohr steht. Die beiden so miteinander in Kontakt stehenden Rohre wirken wie ein Rohr mit einer Wandstärke die gleich der zusammengesetzten Wandstärke der beiden verwendeten Rohre ist, solange die Rohre einer Biegespannung unterworfen sind.

Die in der US 4,304,147 vorgeschlagene Konstruktion bringt aber dann nicht mehr den gewünschten Verstärkungseffekt, wenn neben Biegespannungen auch Zug- und Druckspannungen, Befestigungsspannungen oder Drehmomente durch die Rohr-in-Rohr-Kombination aufgenommen werden soll.

Aus der WO 97/48507 A1 geht die Verbindung von zwei rohrförmigen Wellenteilen, beispielsweise einer Lenkspindel, in einem überlappenden Abschnitt der beiden Wellenteile hervor, wobei das im Überlappungsabschnitt innen liegende Wellenteil aufgeweitet wird.

Die WO 02/02377 A1 zeigt eine Überlastungssicherung, insbesondere für eine Lenkradsperre, wobei ein äußeres, hülsenförmiges Fügeteil ein rohrförmiges Lenkspindelteil umgibt und mit diesem über eine Presspassung verbunden ist, wobei sich der Reibschluss im Falle einer Überlast löst.

Die US 4,469,356 A bezieht sich auf die Ausbildung von Steckern für Fluidleitungen, insbesondere in Flugzeugen. Zur einfachen Ausbildung von solchen Steckverbindern werden die Steckerverbinder integral mit den Enden der Rohrleitungen ausgebildet, wobei die Enden der Rohrleitungen zusammen mit auf diesen angeordneten Hülsen entsprechend umgeformt werden.

Ein Lenkspindelteil der eingangs genannten Art geht aus der WO 2007/098513 A1 hervor. Bei der Herstellung dieses Lenkspindelteils wird eine Hülse in einen Endabschnitt des Rohrs eingesetzt, insbesondere eingepresst, worauf der Endabschnitt des Rohrs und die Hülse gemeinsam umgeformt werden. Hierbei erfolgt ein Fließen des Materials des Rohrs und der Hülse. Weiters wird nach dem Umformen des Rohrs und der Hülse ein Innengewinde in die Innenwand der Hülse eingebracht und das Rohr in einem an sein Ende anschließenden Abschnitt mit einer Außenverzahnung versehen. Bei dem in dieser Weise ausgebildeten Lenkspindelteil besteht im Reparaturfall die Gefahr, dass die Hülse vom Rohr gelöst wird, insbesondere wenn es sich um das Lenkspindelteil handelt, an dem das Lenkrad angeschlossen wird. Dies ist darin begründet, dass zum Lösen des Lenkrads häufig mit einem Hammer auf die zentrale Verbindungsschraube geschlagen wird, um das Lösen des Lenkrads von der Lenkspindel zu erleichtern. Durch diese Hammerschläge ist es möglich, dass die Hülse in das Innere des Rohrs eingetrieben wird. Ein weiterer Nachteil der aus dieser Schrift bekannten Lösung besteht darin, dass die gemeinsame Umformung der Hülse mit dem Verbindungsabschnitt eines relativ aufwendigen Umformverfahrens, beispielsweise einer Hämmeroperation, bedarf.

Aufgabe der Erfindung ist es ein Verfahren der eingangs genannten Art bereitzustellen, welches einfach und kostengünstig durchführbar ist und durch das eine sichere Verbindung zwischen dem Rohr und der Hülse ermöglicht wird, bzw. ein mit einem Lenkrad verbundenes Lenkspindelteil der eingangs genannten Art bereitzustellen, welches einfach und kostengünstig herstellbar ist und bei dem eine sichere Verbindung zwischen dem Rohr und der Hülse erreicht werden kann. Erfindungsgemäß gelingt dies durch ein Verfahren mit den Merkmalen des Anspruchs 1 bzw. durch ein mit einem Lenkrad verbundenen Lenkspindelteil mit den Merkmalen des Anspruchs 15. Aus den abhängigen Ansprüchen gehen vorteilhafte Weiterbildungen der Erfindung hervor.

Beim Verfahren der Erfindung wird zur Ausbildung des Verstärkungsabschnitts des Lenkspindelteils die Hülse über einen Endabschnitt des Rohrs, also auf die äußere Oberfläche des Rohrs, aufgeschoben, vorzugsweise unter Ausbildung eines Presssitzes aufgepresst. Im Weiteren wird das Rohr zumindest über einen Teil der Länge seines von der Hülse umgebenen Endabschnitts unter plastischer Verformung aufgeweitet, also in seinem Durchmesser vergrößert. Hierbei kann eine sehr stabile Verbindung zwischen der Hülse und dem Rohr ausgebildet werden. Die Hülse wird bei der Aufweitung des Rohrs elastisch und plastisch verformt.

Vorteilhafterweise ist die äußere Oberfläche des Endabschnitts des Rohrs oder die innere Oberfläche der Hülse mit einer in Axialrichtung des Rohrs bzw. der Hülse verlaufenden Verzahnung versehen, wobei sich die Zähne der Verzahnung bei der Aufweitung des Rohrs in das andere der beiden Teile eingraben. Eine solche Verzahnung kann auch als axiales Nutenrändel bezeichnet werden. Stattdessen könnten auch in Umfangsrichtung verlaufende Materialerhebungen in Form eines ringförmigen Nutenrändels (=eine Rollierung) oder in mindestens eine schräge Richtung verlaufende Zähne, Wülste oder Stege, z.B. in Form eines Diamanträndels vorgesehen sein. Auch eine Kombination einer axialen Verzahnung an einem der beiden Teile mit einem ringförmigen Nutenrändel oder in mindestens eine schräge Richtung verlaufende Zähne, Wülste oder Stege am anderen der beiden Teile ist denkbar und möglich.

Vorzugsweise ist das Lenkspindelteil insgesamt als Hohlwelle ausgebildet. Hierbei kann beim erfindungsgemäßen Verfahren vorteilhafterweise ein handelsübliches hohlzylindrisches Rohr als Ausgangsprodukt für die Herstellung des Lenkspindelteils herangezogen werden. Es genügt dabei, die Wandstärke des als Ausgangsprodukts verwendeten hohlzylindrischen Rohrs derart klein auszuwählen, dass gerade eine ausreichende Stabilität des Lenkspindelteils, insbesondere für die erforderliche Übertragung des Drehmoments erhalten wird. Eine umformende Bearbeitung des Rohrs über seine gesamte Länge, um abseits des Verbindungsabschnitts eine gewünschte, dünnere Wandstärke zu erzielen, ist somit nicht erforderlich. Die Hülse kann ebenfalls ein Rohrabschnitt eines handelsüblichen hohlzylindrischen Rohres sein. Alternativ ist es jedoch auch denkbar und möglich, die Hülse als Dreh- oder Umformteil bereitzustellen und entsprechend der Erfindung auf den Endabschnitt des Rohres aufzuschieben. Durch die auf den Endabschnitt des Rohrs aufgeschobene Hülse wird im Verstärkungsabschnitt eine ausreichend große Wandstärke erreicht, um eine stabile Verbindung mit einem anderen Teil der Lenksäule zu ermöglichen.

Der Verstärkungsabschnitt wird mit Verbindungselementen versehen, die für eine Verbindung des Lenkspindelteils mit einem anderen Teil dienen. Dieses andere Teil stellt vorzugsweise das Lenkrad dar. Auch eine Verbindung mit einer Gabel für ein Universalgelenk oder einem Lenkritzel ist denkbar und möglich. Zumindest ein Teil der Verbindungselemente, über welche die Verbindung erfolgt, befindet sich hierbei im durch die Hülse verstärkten Verstärkungsabschnitt, der eine größere Wandstärke als ein zur Längsmitte des Lenkspindelteils hin an den Verstärkungsabschnitt anschließender Abschnitt des Lenkspindelteils aufweist. Solche Verbindungselemente, mit denen der Verstärkungsabschnitt versehen wird, können beispielsweise ein in die innere Oberfläche des Endabschnitts des Rohrs, der von der Hülse umgeben wird, eingebrachtes Innengewinde und/oder eine in die äußere Oberfläche der Hülse eingebrachte Funktionskontur sein, die zur Ausbildung eines in Drehrichtung wirkenden Formschlusses mit dem mit dem Lenkspindelteil zu verbindenden Teil dient. Eine solche Funktionskontur kann beispielsweise von einer in axialer Richtung der Hülse verlaufenden Verzahnung oder von einer von der Kreisform abweichenden äußeren Querschnittsform der Hülse, beispielsweise einer polygonalen Kontur oder einer mit auf gegenüberliegenden Seiten angeordneten Abflachungen versehenen Kreiskontur gebildet werden. Anstelle der Ausbildung der äußeren Oberfläche der Hülse mit einer Funktionskontur oder zusätzlich hierzu kann das Rohr in einem dem Verstärkungsabschnitt benachbarten Abschnitt mit einer Funktionskontur versehen sein, die zur Ausbildung eines in Drehrichtung wirkenden Formschlusses mit einem mit dem Lenkspindelteil zu verbindenden Teil dient.

In einer vorteilhaften Ausführungsform der Erfindung ist die Hülse vor dem Aufschieben auf den Endabschnitt des Rohres mit einer Funktionskontur versehen.

In einer weiteren vorteilhaften Ausführungsform der Erfindung wird die Funktionskontur in die äußere Oberfläche der Hülse eingebracht, nachdem das Rohr im von der Hülse umgebenen Endabschnitt aufgeweitet worden ist, wobei beim Einbringen der Funktionskontur in die Hülse eine radial nach innen gerichtete Kraft oder Kraftkomponente aufgebracht wird. Dadurch kann die Festigkeit der Verbindung zwischen der Hülse und dem Rohr vorteilhafterweise weiter erhöht werden.

Es ist auch denkbar und möglich die Hülse nach dem Aufweiten des Endabschnitts nur über eine Teil ihrer Länge durch die Einwirkung von nach innen gerichteten Kraft oder Kraftkomponenten zu Reduzieren und dabei die im anderen Teil ihrer Länge von vorne herein ausgebildete Funktionskontur nicht zu verändern.

Eine vorteilhafte Ausführungsform der Erfindung sieht vor, dass beim Aufweiten des Rohrs im von der Hülse umgebenen Endabschnitt gleichzeitig in die innere Oberfläche des Rohrs ein Innengewinde eingeformt wird. Hierzu wird ein Aufweitdorn eingesetzt, der gleichzeitig als Dorn zum Gewindefurchen ausgebildet ist.

Das Rohr wird vorzugsweise mit einem zur Mitte des Lenkspindelteils hin sich, insbesondere konisch, erweiternden Abschnitt versehen, der an den Endabschnitt, auf den die Hülse aufgeschoben wird, anschließt oder ganz oder teilweise in diesem Endabschnitt liegt. Dieser sich erweiternde Abschnitt kann einer Verschiebung der Hülse zur Mitte des Lenkspindelteils hin formschlüssig entgegenwirken.

In einer vorteilhaften Ausführungsform der Erfindung wird vor dem axialen Aufschieben der Hülse auf den Endabschnitt des Rohrs das Rohr über den Endabschnitt und gegebenenfalls über einen zur Längsmitte des Rohrs hin anschließenden Abschnitt reduziert, also in seinem Durchmesser verringert, wobei es plastisch verformt wird. Dieses Reduzieren kann beispielsweise durch Pressen und/oder durch umlaufendes Walzen, bzw. Rändeln erfolgen. Auch andere Reduziermethoden, beispielsweise durch Hämmern sind denkbar und möglich. Vorteilhafterweise kann beim Reduzieren des Rohrs im Endabschnitt des Rohrs in seine äußere Oberfläche eine in axiale Richtung sich erstreckende Verzahnung bzw. eine axiale Rändelung eingebracht werden. Abgesehen von dieser Verzahnung oder Rändelung kann der Endabschnitt des Rohrs hohlzylindrisch ausgebildet sein. An diesen somit im Wesentlichen hohlzylindrischen Endabschnitt schließt zur Längsmitte hin günstigerweise der bereits erwähnte sich, vorzugsweise konisch, erweiternde Abschnitt an.

Zusätzlich zu den beschriebenen Umformungen im Endabschnitt und dem zur Längsmitte hin anschließenden Abschnitt können über weitere Abschnitte des Rohrs, in welchem gegenüber der ursprünglichen hohlzylindrischen Form abweichende Geometrien benötigt werden, entsprechende Materialumformungen durchgeführt werden, beispielsweise zur Ausbildung von umfänglichen Bogenverzahnungen bzw. Kleeblattprofilen, um eine verschiebbare, aber drehmomentübertragende Verbindung (Teleskopverbindung) mit einem weiteren Lenkspindelteil auszubilden.

Weitere Vorteile und Einzelheiten der Erfindung werden im Folgenden anhand der beiliegenden Zeichnung erläutert. In dieser zeigen:
Fig. 1 ein Lenkspindelteil entsprechend dem Stand der Technik im Längsschnitt;
Fig. 2 eine dreidimensionale Darstellung eines hohlzylindrischen Rohrs und einer Hülse als Ausgangsprodukte zur Durchführung des Verfahrens der Erfindung;
Fig. 3 eine Ansicht, teilweise aufgeschnitten, auf einen an ein Ende anschließenden Teil des Rohrs;
Fig. 4 eine Ansicht eines Teils des Rohrs, teilweise aufgeschnitten, nach dem Reduzieren eines an sein Ende anschließenden Abschnitts, zusammen mit der aufzuschiebenden Hülse;
Fig. 5 eine Darstellung analog Fig. 4 nach dem Aufschieben der Hülse auf einen Endabschnitt des Rohrs;
Fig. 6 einen Längsschnitt durch einen Teil des Rohrs mit der aufgeschobenen Hülse beim Aufweiten des Endabschnitts des Rohrs;
Fig. 7 eine Schrägsicht des fertiggestellten Lenkspindelteils;
Fig. 8 eine Ansicht und
Fig. 9 einen Längsschnitt des Verstärkungsabschnitts und eines daran anschließenden Teils des fertiggestellten Lenkspindelteils;
Fig. 10 einen Längsschnitt durch das fertiggestellte Lenkspindelteil;
Fig. 11 eine Darstellung analog Fig. 9 gemäß einer weiteren Ausführungsvariante der Erfindung, mit einem Teil eines am Lenkspindelteil befestigten Lenkrades;
Fig. 12 eine Schrägsicht eines Teils eines Lenkspindelteils gemäß einer weiteren Ausführungsvariante der Erfindung;
Fig. 13 einen Längsschnitt durch eine Hülse gemäß einer weiteren Ausführungsvariante der Erfindung;
Fig. 14 eine Hülse mit teilweise vorgefertigter Funktionskontur.

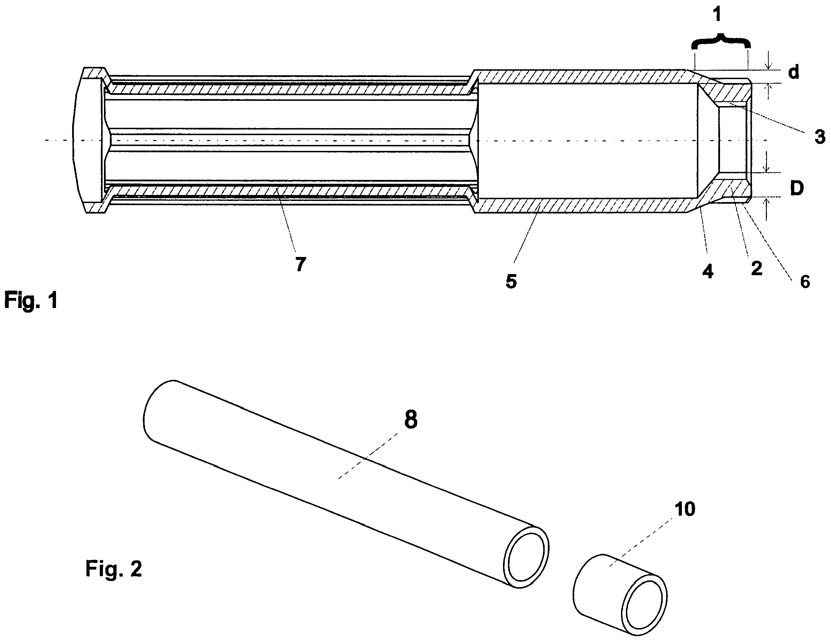

Ein Lenkspindelteil nach dem Stand der Technik wird zunächst anhand von Fig. 1 erläutert. Es handelt sich hierbei um das bezogen auf die Fahrtrichtung hinterste Lenkspindelteil einer Lenkspindel für ein Kraftfahrzeug, an welchem endseitig ein Lenkrad anzubringen ist. Das Lenkspindelteil weist zu diesem Zweck an dem dem Lenkrad zugewandten Ende einen Verbindungsabschnitt 1 auf. Ausgehend vom Ende des Lenkspindelteils umfasst dieser Verbindungsabschnitt 1 einen hohlzylindrischen Abschnitt 2, in welchem ein Innengewinde 3 und eine Außenverzahnung 6 ausgebildet sind, und daran zur Mitte des Lenkspindelteils hin anschließend einen konisch sich erweiternden Abschnitt 4. Insbesondere im hohlzylindrischen Abschnitt 2 ist die Wandstärke D größer als die Wandstärke d in einem an den Verbindungsabschnitt 1 anschließenden Abschnitt 5 des Lenkspindelteils.

Zur Verbindung des nicht dargestellten Lenkrads mit dem Lenkspindelteil wird das Lenkrad auf den Verbindungsabschnitt 1 aufgeschoben, wobei es mit einer konischen Innenwand am konischen Abschnitt 4 zur Anlage gelangt und mit einer Innenverzahnung in die Außenverzahnung 6 eingreift. Weiters wird das Lenkrad mittels einer in das Innengewinde 3 eingeschraubten Schraube mit dem Lenkspindelteil verschraubt.

Auf der vom Verbindungsabschnitt 1 abgewandten Seite weist das Lenkspindelteil einen Abschnitt 7 auf, in welchem es mit einer von einem Kreisbogen abweichenden Kontur versehen ist, um eine in Längsrichtung des Lenkspindelteils verschiebbare (teleskopierbare) aber Drehmoment übertragende Verbindung mit einem weiteren Lenkspindelteil auszubilden. Der Abschnitt 7 kann insbesondere mit einer umfänglichen Bogenverzahnung bzw. einem Kleeblattprofil ausgebildet sein.

Zur Herstellung dieses Lenkspindelteils wird als Ausgangsprodukt ein Rohr eingesetzt, welches den im Bereich des Abschnitts 5 vorliegenden Durchmesser und eine Wandstärke aufweisen, die der Wandstärke D im Verbindungsabschnitt 1 entspricht. Zumindest ist diese anfängliche Wandstärke größer als die Wandstärke d im Abschnitt 5, welche zur Übertragung des Drehmoments noch ausreichend ist, da andernfalls im Verbindungsabschnitt 1 keine ausreichende Wandstärke ausbildbar ist. Dieses Rohr wird zur Herstellung des Lenkspindelabschnitts somit über seine gesamte Längsausdehnung umformend bearbeitet, insbesondere durch Hämmern und/oder Kneten. Würde das Rohr in den Abschnitten 5 und 7 mit seiner ursprünglichen Wandstärke belassen werden, so würde dies zu einem erheblichem Mehrbedarf an Material und entsprechend zu einem hohen Gewicht des Lenkspindelteils führen.

Ein Ausführungsbeispiel der Ausbildung eines Lenkspindelteils gemäß der Erfindung wird im Folgenden anhand der Fig. 2 bis 10 erläutert.

Als Ausgangsprodukt für das in Form einer Hohlwelle auszubildende Lenkspindelteil für ein Kraftfahrzeug, welches einen Abschnitt der Längserstreckung einer Lenksäule für ein Kraftfahrzeug bildet, wird ein hohlzylindrisches Rohr 8 verwendet (vgl. Fig. 2), d.h. das Rohr 8 weist über seine gesamte Längserstreckung eine gleichförmige Wandstärke auf. Die Auswahl der Wandstärke d des Rohrs 8 erfolgt auf Basis des zu übertragenden Drehmoments und weiterer Anforderungen, insbesondere bezogen auf die Steifigkeit und Stabilität, an die Lenkspindel in den an den Endabschnitt 9 angrenzenden Bereichen. Die Ermöglichung der Verbindung der Lenkspindel mit dem Lenkrad ist kein Maßstab für die Auswahl der Wandstärke des Rohrs 8.

Weiters wird als Ausgangsprodukt für das auszubildende Lenkspindelteil eine hohlzylindrische Hülse 10 verwendet.

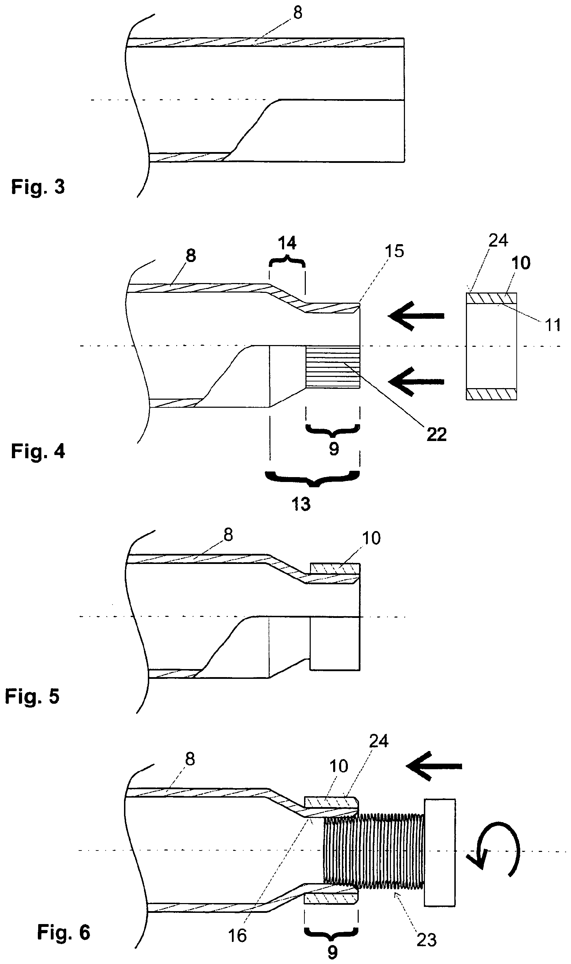

Das Rohr 8 wird zunächst in einem Abschnitt 13, der an eines seiner Enden 15 anschließt, durch eine plastische Verformung reduziert, d.h. in seinem Durchmesser verringert, beispielsweise durch Pressen. Es wird hierbei eine Form ausgebildet, wie sie aus Fig. 4 ersichtlich ist. In einem an das Ende 15 anschließenden Endabschnitt 9 besitzt das Rohr eine im Wesentlichen (d.h. abgesehen von der Rändelung bzw. Verzahnung 22, deren Funktion weiter unten beschrieben wird) hohlzylindrische Form. An diesen Endabschnitt 9 schließt ein zur Längsmitte des Rohrs hin sich konisch erweiternder Abschnitt 14 an. Denkbar und möglich sind auch andere als konische Formen des Übergangs zwischen den Endabschnitt 9 zur Längsmitte hin.

In der Folge wird die Hülse 10 auf den Endabschnitt 9 des Rohrs 8 axial aufgepresst, wonach die Hülse 10 das Rohr 8 über dessen Endabschnitt 9 axial umgibt und kraftschlüssig mit diesem verbunden ist. Vorzugsweise schließen das Ende 15 des Rohrs 8 und das in die gleiche Richtung gerichtete Ende der Hülse 10 hierbei bündig miteinander ab. Denkbar und möglich ist es aber auch, dass eines dieser beiden Teile 8, 10 über das andere Teil etwas axial vorsteht.

Der aufgeschobene Zustand der Hülse 10 auf das Rohr 8 ist in Fig. 5 dargestellt.

In der Folge wird das Rohr 8 über den von der Hülse 10 umgebenen Endabschnitt 9 aufgeweitet, wobei es plastisch verformt wird. Spätestens jetzt schneiden die Zähne einer im Endabschnitt 9 des Rohrs auf die äußere Oberfläche des Rohrs 8 aufgebrachten, in axialer Richtung des Rohrs 8 verlaufenden Verzahnung 22 in die innere Oberfläche 11 der Hülse 10 ein. Hierdurch wird die Verbindung zwischen dem Rohr 8 und der Hülse 10 verstärkt. Die Hülse 10 wird bei der Aufweitung des Endabschnitts 9 des Rohrs 8 sowohl elastisch als auch plastisch verformt (im Sinne einer Aufweitung).

Durch das Einschneiden der Zähne der Verzahnung 22 des Rohrs 8 in die innere Oberfläche 11 der Hülse 10 wird auch ein Formschluss gegen eine gegenseitige Verdrehung dieser beiden Teile 8, 10 ausgebildet.

Günstigerweise wird die Verzahnung 22 während der über den Abschnitt 13 erfolgenden Reduzierung des Rohrs 8 ausgebildet, beispielsweise durch ein geeignetes Presswerkzeug. Auch eine Ausbildung nach dem Reduzierschritt ist möglich.

Beim Aufweiten des Rohrs 8 im Endabschnitt 9 kann gleichzeitig ein Innengewinde 17 in die innere Oberfläche 16 des Rohrs 8 im Bereich seines Endabschnitts 9 eingebracht werden. Zu diesem Zweck kann ein Aufweitdorn 23 eingesetzt werden, der gleichzeitig als Dorn zum Gewindefurchen ausgebildet ist, vgl. Fig. 6.

Ein Innengewinde 17 in den Endabschnitt 9 des Rohrs 8 könnte auch nach dem Schritt des Aufweitens des Endabschnitts 9 des Rohrs 8 eingebracht werden. Das Aufweiten des Endabschnitts 9 des Rohrs 8 könnte auch in anderer Weise als durch einen Dorn erfolgen, beispielsweise auch durch eine unter Druck gesetzte Flüssigkeit.

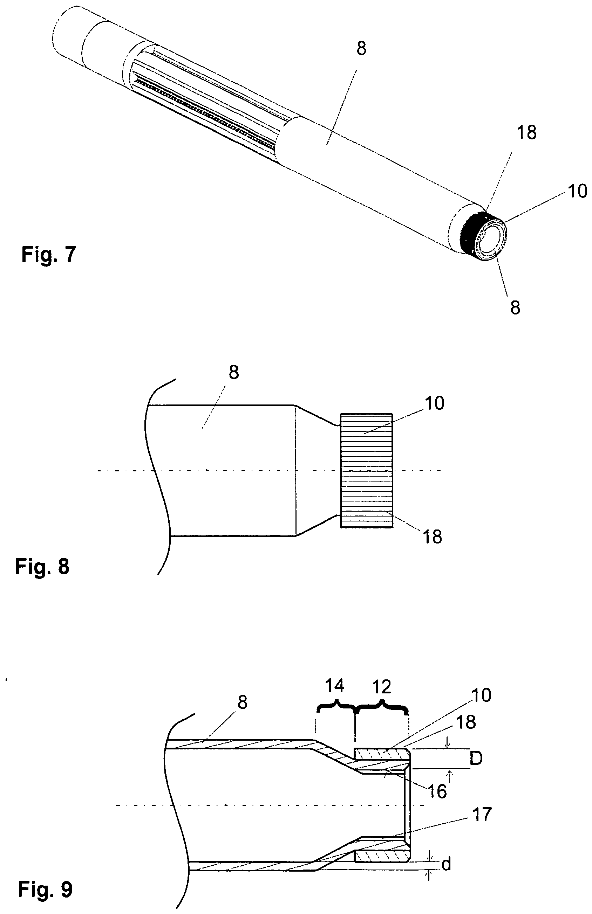

Im Weiteren wird die äußere Oberfläche 24 der Hülse 10 mit einer Funktionskontur 18 versehen. Diese dient zur Ausbildung eines in Drehrichtung wirkenden Formschlusses mit einem mit dem Lenkspindelteil zu verbindenden Teil, beispielsweise einem Lenkrad. Diese Funktionskontur 18 kann beispielsweise in Form einer in Axialrichtung verlaufenden Verzahnung ausgebildet sein, wie dies aus den Fig. 7 und 8 ersichtlich ist. Bei der Einbringung der Funktionskontur 18 wird günstigerweise eine radial nach innen wirkende Kraft aufgebracht, wodurch eine Reduzierung des Außendurchmessers der Hülse 10 erfolgt, und auf diese Weise die Verbindung zwischen der Hülse 10 und dem Rohr 8 im Endabschnitt 9 weiter verfestigt wird, beispielsweise indem sich die Zähne der Verzahnung 22 weiter in die innere Oberfläche 11 der Hülse 10 eingraben. Die Verringerung des Durchmessers der Hülse 10 erfolgt bei der Einwirkung der nach innen gerichteten Kraft unter plastischer Verformung der Hülse 10. Die nach innen gerichtete Kraft kann im einfachsten Fall durch eine werkzeuggebundene Pressung oder auch eine Walzoperation mit oder ohne gleichzeitigem Rändel aufgebracht werden.

Anstelle einer Aufbringung einer radial nach innen gerichteten Kraft auf die Hülse 10 gleichzeitig bei der Einbringung einer Funktionskontur 18 kann eine radial nach innen gerichtete Kraft in einem separaten Arbeitsschritt (vorzugsweise vor Einbringung der Funktionskontur 18) aufgebracht werden. Es ist auch denkbar und möglich, nach dem Einbringen der Funktionskontur 18 durch die Aufbringung einer nach innen gerichteten Kraft, die Hülse zusätzlich durch eine nach innen gerichtete Kraft zu reduzieren.

Das fertiggestellte Lenkspindelteil ist in den Fig. 7 bis 10 dargestellt. Über einen Endbereich des Lenkspindelteils, der im gezeigten Ausführungsbeispiel unmittelbar an ein Ende des Lenkspindelteils anschließt (auch ein geringfügiger Abstand zum Ende des Lenkspindelteils könnte vorhanden sein) und über den die Hülse 10 das Rohr 8 umgibt, ist die insgesamte Wandstärke D des Lenkspindelteils vergrößert und dieser Teil der Länge des Lenkspindelteils bildet einen in Form einer Hohlwelle ausgebildeten Verstärkungsabschnitt 12, der Verbindungselemente 17, 18 zur Verbindung mit einem anderen Teil der Lenksäule, insbesondere dem Lenkrad, besitzt. In einem zur Längsmitte des Lenkspindelteils an den Verstärkungsabschnitt 12 anschließenden in Form einer Hohlwelle ausgebildeten Abschnitt, hier des sich erweiternden Abschnitts 14 (und auch in den sich daran anschließenden Abschnitten 21, 19, 20) ist die Wandstärke des Lenkspindelteils demgegenüber geringer. In dem an den sich erweiternden Abschnitt 14 anschließenden Abschnitt 21 entspricht die Wandstärke des Lenkspindelteils der ursprünglichen Wandstärke d des Rohrs 8. Im sich erweiternden Abschnitt 14 ist sie demgegenüber geringfügig größer. Die Wandstärke D im Verstärkungsabschnitt 12 entspricht annähernd der ursprünglichen Wandstärke d des Rohrs 8 plus der ursprünglichen Wandstärke der Hülse 10.

Die Länge des Verstärkungsabschnitts 12 ist vorzugsweise kleiner als ein Zehntel der gesamten Länge des Lenkspindelteils.

Im gezeigten Ausführungsbeispiel ist das Lenkspindelteil 1 weiters über einen Abschnitt 19 seiner Längserstreckung mit einem von einer Kreisform abweichenden Profil versehen, welches hier in Form einer umfänglichen Bogenverzahnung bzw. eines Kleeblattprofils ausgebildet ist. Diese Formgebung dient zur in Längsrichtung verschiebbaren, aber gegen eine Verdrehung formschlüssig gesicherten Verbindung (Teleskopverbindung) mit einem weiteren nicht dargestellten Lenkspindelteil.

In den Abschnitten 20, 21 seiner Längserstreckung wird das Lenkspindelteil vom Rohr 8 in seiner ursprünglichen Form gebildet. Das Rohr 8 muss somit nur über Teile seiner Längserstreckung umformend bearbeitet werden.

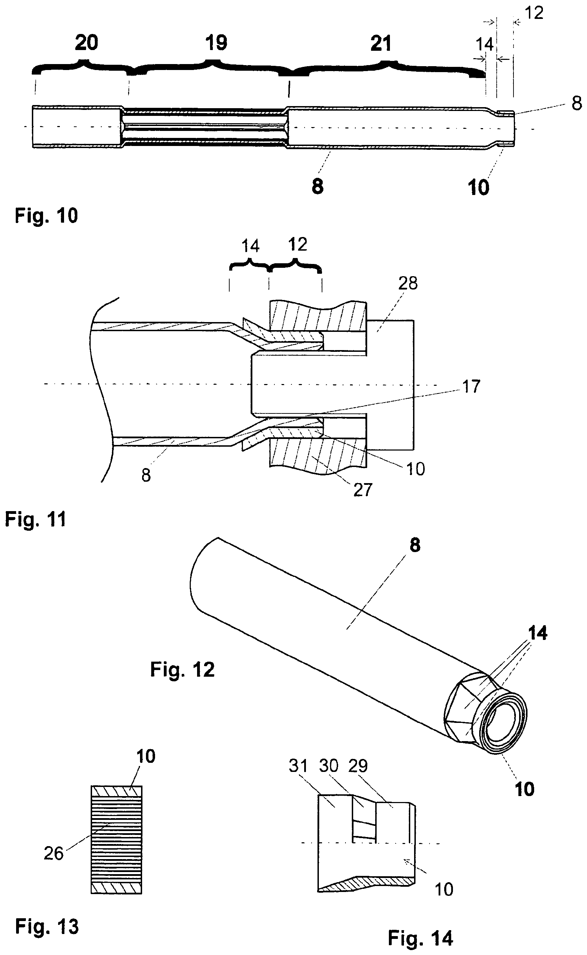

Gemäß einer Ausführungsvariante der Erfindung wird beim axialen Aufschieben der Hülse 10 auf das Rohr 8 die Hülse 10 in einem Abschnitt anschließend an ihr vom benachbarten Ende des Lenkspindelteils abgewandtes Ende 25 auf den zur Mitte hin sich erweiternden Rohrdurchmesser aufgepresst und hierbei aufgeweitet, wie dies in Fig. 11 dargestellt ist.

In Fig. 11 ist weiters schematisch ein Teil eines Lenkrades 27 dargestellt, das mit dem Lenkspindelteil verbunden ist. Hierbei ist die Nabe des Lenkrades mit einer Innenverzahnung auf die von der Funktionskontur 18 gebildete Außenverzahnung aufgeschoben und durch eine in das Innengewinde 17 eingeschraubte Befestigungsschraube 28 befestigt.

Eine weitere Ausführungsvariante der Erfindung wird anhand von Fig. 12 erläutert. Hier wird eine Funktionskontur zur Ausbildung eines in Drehrichtung wirkenden Formschlusses mit dem mit dem Lenkspindelteil zu verbindenden Teil in das Rohr 8 eingebracht, und zwar in einem an den von der Hülse 10 umgebenen Endabschnitt 12 zur Mitte des Rohrs 8 hin anschließenden, sich erweiternden Abschnitt 14. Die Funktionskontur wird hier durch eine polygonale äußere Querschnittsform dieses Abschnitts 14 ausgebildet. In diesem Ausführungsbeispiel kann die äußere Oberfläche 24 der Hülse 10 als Zentrierfläche wirken. Bei einem Bearbeitungsschritt dieser Zentrierfläche oder in einem separaten Bearbeitungsschritt kann (analog wie im Zusammenhang mit dem ersten Ausführungsbeispiel der Erfindung beschrieben) nach dem Aufweiten des Rohrs 8 im von der Hülse 10 umgebenen Bereich auf die Hülse 10 eine radial nach innen gerichtete Kraft aufgebracht werden.

Fig. 13 zeigt weiters eine Ausführungsform, bei der die innere Oberfläche 11 der Hülse 10 mit einer in axialer Richtung ausgerichteten Verzahnung 26 versehen ist.

Unterschiedliche weitere Modifikationen der beschriebenen Ausführungsbeispiele der Erfindung sind denkbar und möglich, ohne den Bereich der Erfindung zu verlassen. So könnten in den Verstärkungsabschnitt 12 andere Verbindungselemente als das Innengewinde 17 des Rohrs 8 und die Funktionskontur 18 der Hülse 10 eingebracht werden. Beispielsweise könnte die Funktionskontur 18 auch an der inneren Oberfläche des Rohrs 8 und ein Gewinde an der äußeren Oberfläche der Hülse 10 angebracht werden. Auch Ausbildungen ohne Gewinde, weder innen noch außen, sind denkbar und möglich.

In der Fig. 14 ist eine alternative Ausführungsform für eine erfindungsgemäße Hülse 10 veranschaulicht. Im oberen Teil ist die Hülse 10 in Seitenansicht und im unteren Teil in Schnittdarstellung im Längsschnitt dargestellt. Die Hülse 10 ist in drei Hülsenabschnitte gegliedert, wobei die Hülse 10 derart auf das Rohr 8 aufgeschoben wird, dass ein erster Hülsenabschnitt 29 in Richtung des Endes 15 des Rohres zeigt und eine im Wesentlichen zylindrische Form aufweist. In einen zweiten Hülsenabschnitt 30, der sich unmittelbar an den ersten Hülsenabschnitt anschließt, ist eine Funktionskontur zur Übertragung von Drehmomenten eingearbeitet, beispielsweise in einer Zerspanungs und/oder Umformoperation. An den zweiten Hülsenabschnitt 30 schließt sich ein dritter Hülsenabschnitt 31 an, der ebenfalls eine im Wesentlichen zylindrische Form aufweist. Nach dem Aufschieben der Hülse 10 auf das Rohr 14 wird in dieser Ausführungsform bevorzugt nur der erste Hülsenabschnitt 29 durch von außen wirkende Kräfte umgeformt oder reduziert, wobei analog zu den weiteren Ausführungsbeispielen eine weitere Funktionskontur oder auch nur ein Zentriersitz eingeformt werden kann.

Im Fall der verschiedenen Umformoperationen oder anderen Fertigungsstufen, wie sie in den Ausführungsformen der Erfindung vorgesehen sind, ist es denkbar und möglich, dass das Ende 15 des Rohres 8 und das in die gleiche Richtung gerichtete Ende der Hülse 10 eine unterschiedliche Position bezüglich der Längsachse des Rohres 8 einnehmen. Es ist denkbar und möglich, in einer nachfolgenden Fertigungsoperation das Ende 15 des Rohres 8 zu bearbeiten, um eine plane Stirnfläche oder eine andere gewünschte Geometrie der Stirnfläche zur Befestigung des Bauteils, das an diesem Ende der Lenkspindel, beispielsweise dem Lenkrad 27, auszubilden. Die Bearbeitung erfolgt vorzugsweise durch Zerspanung, insbesondere um die weitere Einbringung von Spannungen, die die Festigkeit der Verbindung zwischen Hülse 10 und Rohr 8 herabsetzen könnten, zu vermeiden beziehungsweise zu reduzieren.

**Legende zu den Hinweisziffern:**

| | | | |
|---|---|---|---|
| 1 | Verbindungsabschnitt | 29 | erster Hülsenabschnitt |
| 2 | hohlzylinderförmiger Abschnitt | 30 | zweiter Hülsenabschnitt |
| 3 | Innengewinde | 31 | dritter Hülsenabschnitt |
| 4 | konischer Abschnitt | | |
| 5 | Abschnitt | | |
| 6 | Außenverzahnung | | |
| 7 | Abschnitt | | |
| 8 | Rohr | | |
| 9 | Endabschnitt | | |
| 10 | Hülse | | |
| 11 | innere Oberfläche | | |
| 12 | Verstärkungsabschnitt | | |
| 13 | Abschnitt | | |
| 14 | Abschnitt | | |
| 15 | Ende | | |
| 16 | innere Oberfläche | | |
| 17 | Innengewinde | | |
| 18 | Funktionskontur | | |
| 19 | Abschnitt | | |
| 20 | Abschnitt | | |
| 21 | Abschnitt | | |
| 22 | Verzahnung | | |
| 23 | Aufweitdorn | | |
| 24 | äußere Oberfläche | | |
| 25 | Ende | | |
| 26 | Verzahnung | | |
| 27 | Lenkrad | | |
| 28 | Befestigungsschraube | | |

## Patentansprüche

1. Verfahren zur Herstellung eines einen Abschnitt einer Lenkspindel bildenden Lenkspindelteils, welches zumindest in einem Endbereich einen Verstärkungsabschnitt (12) aufweist, über den das Lenkspindelteil eine gegenüber einem zur Längsmitte des Lenkspindelteils hin anschließenden Abschnitt (14, 21) des Lenkspindelteils vergrößerte Wandstärke (D) aufweist, und welches ein Rohr (8) und eine im Verstärkungsabschnitt (12) des Lenkspindelteils angeordnete und die vergrößerte Wandstärke (D) ausbildende Hülse (10) umfasst, wobei Verbindungselemente (17, 18) ausgebildet werden, die zur Verbindung des Lenkspindelteils mit einem Lenkrad oder einer Gabel für ein Universalgelenk oder einem Lenkritzel dienen und von denen sich zumindest ein Teil im durch die Hülse (10) verstärkten Verstärkungsabschnitt (12) befindet, **dadurch gekennzeichnet, dass** zur Ausbildung des Verstärkungsabschnitts (12) des Lenkspindelteils die Hülse (10) über einen Endabschnitt (9) des Rohrs (8) axial aufgeschoben wird und im Weiteren das Rohr (8) zumindest über einen Teil der Länge seines von der Hülse (10) umgebenen Endabschnitts (9) aufgeweitet und hierbei plastisch verformt wird, wobei die Hülse (10) elastisch und plastisch verformt wird.

2. Verfahren nach Anspruch 1, **dadurch gekennzeichnet, dass** beim axialen Aufschieben der Hülse (10) auf den Endabschnitt (9) des Rohrs (8) ein Presssitz zwischen der Hülse (10) und dem Rohr (8) ausgebildet wird.

3. Verfahren nach Anspruch 1 oder 2, **dadurch gekennzeichnet, dass** vor dem axialen Aufschieben der Hülse (10) auf den Endabschnitt (9) des Rohrs (8) das Rohr (8) über den Endabschnitt (9) oder einen den Endabschnitt (9) umfassenden Abschnitt (9, 14) in seinem Durchmesser verringert wird.

4. Verfahren nach Anspruch 3, **dadurch gekennzeichnet, dass** beim und/oder nach dem Verringern des Durchmessers des Rohrs (8) im Endabschnitt (9) des Rohrs (8) in die äußere Oberfläche des Rohrs (8) eine Rändelung eingebracht wird.

5. Verfahren nach Anspruch 4, **dadurch gekennzeichnet, dass** die Rändelung in Form einer in Axialrichtung sich erstreckenden Verzahnung (22) ausgebildet wird.

6. Verfahren nach einem der Ansprüche 1 bis 5, **dadurch gekennzeichnet, dass** vor dem axialen Aufschieben der Hülse (10) auf den Endabschnitt (9) des Rohrs (8) die innere Oberfläche (11) der Hülse (10) mit einer Rändelung, vorzugsweise in Form einer sich in axialer Richtung erstreckenden Verzahnung (26), versehen wird.

7. Verfahren nach einem der Ansprüche 1 bis 6, **dadurch gekennzeichnet, dass** zur Ausbildung eines in Drehrichtung wirkenden Formschlusses mit dem mit dem Lenkspindelteil zu verbindenden Teil die äußere Oberfläche (24) der Hülse (10) mit einer Funktionskontur (18) versehen wird.

8. Verfahren nach einem der Ansprüche 1 bis 7, **dadurch gekennzeichnet, dass** zur Ausbildung eines in Drehrichtung wirkenden Formschlusses mit dem mit dem Lenkspindelteil zu verbindenden Teil die äußere Oberfläche des Rohrs (8) in einem dem Verstärkungsabschnitt (12) benachbarten Abschnitt (14) mit einer Funktionskontur versehen wird.

9. Verfahren nach einem der Ansprüche 1 bis 8, **dadurch gekennzeichnet, dass** nach dem Aufweiten des Rohrs (8) über zumindest einen Teil der Länge seines von der Hülse (10) umgebenen Endabschnitts (9) eine radial nach innen gerichtete Kraft oder Kraftkomponente auf die Hülse (10) aufgebracht wird.

10. Verfahren nach Anspruch 7 und 9, **dadurch gekennzeichnet, dass** bei der Aufbringung der radial nach innen gerichteten Kraft oder Kraftkomponente auf die Hülse (10) die Funktionskontur (18) in die äußere Oberfläche der Hülse (10) eingebracht wird.

11. Verfahren nach einem der Ansprüche 1 bis 10, **dadurch gekennzeichnet, dass** die innere Oberfläche (16) des Rohrs (8) zumindest über einen Teil der Länge des Verstärkungsabschnitts (12) mit einem Innengewinde (17) versehen wird.

12. Verfahren nach Anspruch 11, **dadurch gekennzeichnet, dass** beim Einbringen des Innengewindes (17) in die innere Oberfläche (16) des Rohrs (8) die Aufweitung des Rohrs (8) zumindest über einen Teil der Länge seines von der Hülse (10) umgebenen Endabschnitts (9) erfolgt.

13. Verfahren nach einem der Ansprüche 1 bis 12, **dadurch gekennzeichnet, dass** das Rohr (8) mit einem zur Längsmitte des Rohrs (8) sich erweiternden Abschnitt (14) versehen wird, der an den von der Hülse (10) umgebenen Endabschnitt (9) des Rohrs (8) zur Längsmitte des Rohrs (8) hin anschließt.

14. Verfahren nach Anspruch 13, **dadurch gekennzeichnet, dass** beim axialen Aufschieben der Hülse (10) auf das Rohr (8) die Hülse (10) über einen Abschnitt der an ihr vom benachbarten Ende des Lenkspindelteils abgewandtes Ende (25) anschließt, auf den sich erweiternden Abschnitt (14) des Rohrs (8) aufgepresst und hierbei aufgeweitet wird.

15. Mit einem Lenkrad oder einer Gabel für ein Universalgelenk oder einem Lenkritzel verbundenes Lenkspindelteil, welches einen Abschnitt einer Lenkspindel bildet, wobei das Lenkspindelteil in einem Endbereich einen Verstärkungsabschnitt (12) aufweist, über den das Lenkspindelteil eine gegenüber einem zur Längsmitte des Lenkspindelteils hin anschließenden Abschnitt (14, 21) des Lenkspindelteils vergrößerte Wandstärke (D) aufweist, und wobei das Lenkspindelteil ein Rohr (8) und eine im Verstärkungsabschnitt (12) des Lenkspindelteils angeordnete und die vergrößerte Wandstärke (D) ausbildende Hülse (10) umfasst und Verbindungselemente (17, 18) zur Verbindung mit dem Lenkrad oder der Gabel für das Universalgelenk oder dem Lenkritzel aufweist, von denen sich zumindest ein Teil im durch die Hülse (10) verstärkten Verstärkungsabschnitt (12) befindet, **dadurch gekennzeichnet, dass** die Hülse (10) auf der äußeren Oberfläche eines Endabschnitts (9) des Rohrs (8) angeordnet und gegen eine Verschiebung gegenüber dem Rohr (8) in axialer Richtung des Rohrs (8) und in Drehrichtung kraftschlüssig und/oder formschlüssig gesichert ist.

## Claims

1. Method for producing a steering shaft part that forms a section of a steering shaft, said steering shaft part having, at least in an end region, a reinforcement section (12) over which the steering shaft part has an increased wall thickness (D) compared to an adjoining section (14, 21) of the steering shaft part towards the longitudinal centre of the steering shaft part, and said steering shaft part comprising a tube (8) and a sleeve (10) which is arranged in the reinforcement section (12) of the steering shaft part and forms the increased wall thickness (D), wherein connection elements (17, 18) are formed which serve for connecting the steering shaft part to a steering wheel or a fork for a universal joint or a steering pinion, at least some of said connection elements being located in the reinforcement section (12) reinforced by the sleeve (10), **characterized in that**, in order to form the reinforcement section (12) of the steering shaft part, the sleeve (10) is pushed axially over an end section (9) of the tube (8) and then the tube (8) is widened and thereby plastically deformed at least over a portion of the length of the end section (9) thereof surrounded by the sleeve (10), the sleeve (10) being elastically and plastically deformed.

2. Method according to claim 1, **characterized in that**, when the sleeve (10) is pushed axially onto the end section (9) of the tube (8), a press fit is created between the sleeve (10) and the tube (8).

3. Method according to claim 1 or 2, **characterized in that**, before the sleeve (10) is pushed axially onto the end section (9) of the tube (8), the tube (8) is reduced in diameter over the end section (9) or a section (9, 14) including the end section (9).

4. Method according to claim 3, **characterized in that**, during and/or after the reduction in diameter of the tube (8) in the end section (9) of the tube (8), a knurling is formed in the outer surface of the tube (8).

5. Method according to claim 4, **characterized in that** the knurling is designed in the form of a toothing (22) which extends in the axial direction.

6. Method according to any of claims 1 to 5, **characterized in that**, before the sleeve (10) is pushed axially onto the end section (9) of the tube (8), the inner surface (11) of the sleeve (10) is provided with a knurling, preferably in the form of a toothing (26) which extends in the axial direction.

7. Method according to any of claims 1 to 6, **characterized in that** the outer surface (24) of the sleeve (10) is provided with a functional contour (18) in order to create a form fit with the part to be connected to the steering shaft part, said form fit acting in the direction of rotation.

8. Method according to any of claims 1 to 7, **characterized in that** the outer surface of the tube (8) is provided with a functional contour in a section (14) adjacent to the reinforcement section (12) in order to create a form fit with the part to be connected to the steering shaft part, said form fit acting in the direction of rotation.

9. Method according to any of claims 1 to 8, **characterized in that**, after the tube (8) has been widened over at least a portion of the length of the end section (9) thereof surrounded by the sleeve (10), a radially inwardly directed force or force component is applied to the sleeve (10).

10. Method according to claims 7 and 9, **characterized in that** the functional contour (18) is formed in the outer surface of the sleeve (10) while the radially inwardly directed force or force component is being applied to the sleeve (10).

11. Method according to any of claims 1 to 10, **characterized in that** the inner surface (16) of the tube (8) is provided with an internal thread (17) at least over a portion of the length of the reinforcement section (12).

12. Method according to claim 11, **characterized in that** the widening of the tube (8) at least over a portion of the length of the end section (9) thereof surrounded by the sleeve (10) takes place while the internal thread (17) is being formed in the inner surface (16) of the tube (8).

13. Method according to any of claims 1 to 12, **characterized in that** the tube (8) is provided with a section (14) that widens towards the longitudinal centre of the tube (8), said section adjoining, towards the longitudinal centre of the tube (8), the end section (9) of the tube (8) that is surrounded by the sleeve (10).

14. Method according to claim 13, **characterized in that**, when the sleeve (10) is pushed axially onto the tube (8), the sleeve (10), over a section adjoining the end (25) thereof facing away from the adjacent end of the steering shaft part, is pressed onto the widening section (14) of the tube (8) and is thereby widened.

15. Steering shaft part that is connected to a steering wheel or a fork for a universal joint or a steering pinion and that forms a section of a steering shaft, wherein the steering shaft part has, in an end region, a reinforcement section (12) over which the steering shaft part has an increased wall thickness (D) compared to an adjoining section (14, 21) of the steering shaft part towards the longitudinal centre of the steering shaft part, and wherein the steering shaft part comprises a tube (8) and a sleeve (10) which is arranged in the reinforcement section (12) of the steering shaft part and forms the increased wall thickness (D), and has connection elements (17, 18) for connecting to the steering wheel or the fork for the universal joint or the steering pinion, at least some of said connection elements being located in the reinforcement section (12) reinforced by the sleeve (10), **characterized in that** the sleeve (10) is arranged on the outer surface of an end section (9) of the tube (8) and is secured by a force fit and/or by a form fit to prevent displacement relative to the tube (8) in the axial direction of the tube (8) and in the direction of rotation.

## Revendications

1. Procédé de fabrication d'un élément de colonne de direction formant une section d'une colonne de direction, lequel présente au moins dans une zone d'extrémité une section de renforcement (12), via laquelle l'élément de colonne de direction présente une épaisseur de paroi (D) agrandie par rapport à une section (14, 21) de l'élément de colonne de direction se raccordant vers le centre longitudinal de l'élément de colonne de direction, et lequel comprend un tube (8) et une douille (10) agencée dans la section de renforcement (12) de l'élément de colonne de direction et formant l'épaisseur de paroi (D) agrandie, dans lequel des éléments de liaison (17, 18) sont formés, qui servent de liaison de l'élément de colonne de direction à un volant ou une fourche pour un joint universel ou un pignon de direction et desquels au moins une partie se trouve dans la section de renforcement (12) renforcée par la douille (10), **caractérisé en ce que** pour la réalisation de la section de renforcement (12) de l'élément de colonne de direction, la douille (10) est poussée axialement sur une section d'extrémité (9) du tube (8) et en outre le tube (8) est élargi au moins sur une partie de la longueur de sa section d'extrémité (9) entourée par la douille (10) et est déformé ce faisant plastiquement, dans lequel la douille (10) est déformée élastiquement et plastiquement.

2. Procédé selon la revendication 1, **caractérisé en ce que** lors de la poussée axiale de la douille (10) sur la section d'extrémité (9) du tube (8), un ajustement serré est réalisé entre la douille (10) et le tube (8).

3. Procédé selon la revendication 1 ou 2, **caractérisé en ce qu'**avant la poussée axiale de la douille (10) sur la section d'extrémité (9) du tube (8), le diamètre du tube (8) sur la section d'extrémité (9) ou une section (9, 14) comprenant la section d'extrémité (9) est réduit.

4. Procédé selon la revendication 3, **caractérisé en ce que** lors et/ou après la réduction du diamètre du tube (8) dans la section d'extrémité (9) du tube (8), un moletage est réalisé dans la surface extérieure du tube (8).

5. Procédé selon la revendication 4, **caractérisé en ce que** le moletage est réalisé sous forme de denture (22) s'étendant dans la direction axiale.

6. Procédé selon l'une quelconque des revendications 1 à 5, **caractérisé en ce qu'**avant la poussée axiale de la douille (10) sur la section d'extrémité (9) du tube (8), la surface intérieure (11) de la douille (10) est dotée d'un moletage, de préférence sous forme de denture (26) s'étendant dans la direction axiale.

7. Procédé selon l'une quelconque des revendications 1 à 6, **caractérisé en ce que** pour la réalisation d'un verrouillage par complémentarité de forme agissant dans le sens de rotation avec la partie à relier à l'élément de colonne de direction, une surface extérieure (24) de la douille (10) est dotée d'un contour fonctionnel (18).

8. Procédé selon l'une quelconque des revendications 1 à 7, **caractérisé en ce que** pour la réalisation d'un verrouillage par complémentarité de forme agissant dans le sens de rotation avec la partie à relier à l'élément de colonne de direction, la surface extérieure du tube (8) est dotée d'un contour fonctionnel dans une section (14) adjacente à la section de renforcement (12).

9. Procédé selon l'une quelconque des revendications 1 à 8, **caractérisé en ce qu'**après l'élargissement du tube (8) sur au moins une partie de la longueur de sa section d'extrémité (9) entourée par la douille (10), une force ou composante de force dirigée radialement vers l'intérieur est appliquée sur la douille (10).

10. Procédé selon la revendication 7 et 9, **caractérisé en ce que** lors de l'application de la force ou composante de force dirigée radialement vers l'intérieur sur la douille (10), le contour fonctionnel (18) est introduit dans la surface extérieure de la douille (10).

11. Procédé selon l'une quelconque des revendications 1 à 10, **caractérisé en ce que** la surface intérieure (16) du tube (8) est dotée d'un filetage intérieur (17) au moins sur une partie de la longueur de la section de renforcement (12).

12. Procédé selon la revendication 11, **caractérisé en ce que** lors de la réalisation du filetage intérieur (17) dans la surface intérieure (16) du tube (8), l'élargissement du tube (8) se fait au moins sur une partie de la longueur de sa section d'extrémité (9) entourée par la douille (10).

13. Procédé selon l'une quelconque des revendications 1 à 12, **caractérisé en ce que** le tube (8) est doté d'une section (14) s'élargissant vers le centre longitudinal du tube (8), qui se raccorde à la section d'extrémité (9) du tube (8) entourée par la douille (10) vers le centre longitudinal du tube (8).

14. Procédé selon la revendication 13, **caractérisé en ce que** lors de la poussée axiale de la douille (10) sur le tube (8), la douille (10) se raccorde sur une section de l'extrémité (25) opposée sur celle-ci de l'extrémité adjacente de l'élément de colonne de direction, sur laquelle la section (14) s'élargissant du tube (8) est emmanchée et ainsi élargie.

15. Élément de colonne de direction relié à un volant ou une fourche pour un joint universel ou un pignon de direction, qui forme une section d'une colonne de direction, dans lequel l'élément de colonne de direction présente dans une zone d'extrémité une section de renforcement (12), via laquelle l'élément de colonne de direction présente une épaisseur de paroi (D) agrandie par rapport à une section (14, 21) de l'élément de colonne de direction se raccordant vers le centre longitudinal de l'élément de colonne de direction, et dans lequel l'élément de colonne de direction comprend un tube (8) et une douille (10) agencée dans la section de renforcement (12) de l'élément de colonne de direction et formant l'épaisseur de paroi (D) agrandie et des éléments de liaison (17, 18) pour la liaison au volant ou à la fourche pour le joint universel ou au pignon de direction, desquels au moins une partie se trouve dans la section de renforcement (12) renforcée par la douille (10), **caractérisé en ce que** la douille (10) est agencée sur la surface extérieure d'une section d'extrémité (9) du tube (8) et est bloquée par force et/ou complémentarité de forme dans le sens de rotation et contre un déplacement par rapport au tube (8) dans la direction axiale du tube (8).
